# EUROPÄISCHE PATENTSCHRIFT

(11) **EP 3 603 230 B1**
(45) Veröffentlichungstag und Bekanntmachung des Hinweises auf die Patenterteilung: **22.04.2020**
(21) Anmeldenummer: 18765084.1
(22) Anmeldetag: 31.08.2018
(51) Int. Cl.: H04W 52/36, H01Q 1/24, H01Q 1/32, H04B 7/06, H04W 52/28, H01Q 3/26

(54) **VERFAHREN ZUM REGELN EINER SENDELEISTUNG FÜR EINE VON EINEM KRAFTFAHRZEUG AUSGEHENDE FUNKVERBINDUNG, REGELVORRICHTUNG FÜR EIN KRAFTFAHRZEUG UND KRAFTFAHRZEUG MIT REGELVORRICHTUNG**
METHOD FOR CONTROLLING A TRANSMISSION POWER FOR A RADIO CONNECTION THAT STARTS FROM A MOTOR VEHICLE, CONTROL DEVICE FOR A MOTOR VEHICLE, AND MOTOR VEHICLE HAVING A CONTROL DEVICE
PROCÉDÉ DE COMMANDE D'UNE PUISSANCE DE TRANSMISSION POUR UNE LIAISON RADIO PARTANT D'UN VÉHICULE À MOTEUR, DISPOSITIF DE COMMANDE POUR UN VÉHICULE À MOTEUR ET VÉHICULE À MOTEUR COMPRENANT UN DISPOSITIF DE COMMANDE

(30) Priorität: 08.09.2017 DE 102017215864
(43) Veröffentlichungstag der Anmeldung: 05.02.2020
(73) Patentinhaber: Audi AG, 85045 Ingolstadt (DE)
(72) Erfinder: CENANOVIC, Amir, 85120 Hepberg (DE); REICHARDT, Lars, 85139 Wettstetten (DE)
(86) Internationale Anmeldenummer: PCT/EP2018/073473
(87) Internationale Veröffentlichungsnummer: WO 2019/048351

(56) Entgegenhaltungen:
- WO-A1-2017/106816
- DE-A1- 10 258 805

## Beschreibung

Die Erfindung betrifft ein Verfahren zum Regeln einer Sendeleistung für eine von einem Kraftfahrzeug ausgehende Funkverbindung von zumindest einer Antenne des Kraftfahrzeugs an eine fahrzeugexterne Funkeinrichtung. Die Erfindung betrifft weiterhin eine Regelvorrichtung sowie ein Kraftfahrzeug mit zumindest einer Antenne und einer erfindungsgemäßen Regelvorrichtung.

Die Anzahl an benötigten Antennen in einem Kraftfahrzeug steigt mit den Anforderungen an eine Konnektivität oder Verbindungsfähigkeit von Kraftfahrzeugen mit anderen Geräten über nach außen gerichtete Funkverbindungen, etwa über Funkstandards wie Bluetooth, WLAN (wireless local area network), LTE (long term evolution) oder andere Mobilfunkverfahren. Eine nach außen gerichtete Funkverbindung ist also allgemein eine Mobilfunkverbindung vom Kraftfahrzeug zu einer fahrzeugexternen Funkeinrichtung, etwa einem Mobilfunksendemasten oder eine WLAN-Verbindung des Kraftfahrzeugs mit einem fahrzeugexternen Gerät, etwa bei einer bekannten, sogenannten Car-to-X-Kommunikation. Um eine optimale Abstrahlung eines solchen Sendesignals zu gewährleisten, sind Antennen häufig an einer Außenseite des Kraftfahrzeugs angebracht, etwa an einem Dach oder einem Stoßfänger. Der Nachteil an Dachantennen ist jedoch, dass einerseits etwa an Cabriolets oder ähnlichen Fahrzeugen ohne Dach keine Dachantennen angebracht werden können, und andererseits Dachantennen durch ihre hervorstehende Form beschädigt werden können. Die Gefahr der Beschädigung besteht insbesondere auch bei Antennen, die an einem Stoßfänger angebracht sind. Weiterhin können für die benötigte Anzahl von Antennen nicht genügend Einbauräume am Fahrzeugdach oder den Stoßfängern zur Verfügung stehen.

Man könnte eine Antenne auch in einem Innenraum eines Kraftfahrzeugs positionieren, da sie dort auch bei Unfällen geschützt und somit crashsicherer wäre, sodass sie zumindest in bestimmten Fällen auch nach einem Unfall des Kraftfahrzeugs ein Sendesignal senden könnte. Man sieht jedoch davon ab, da durch Innenraumantennen ein Fahrgast oder Insasse des Kraftfahrzeugs bei einem Senden eines Sendesignals für eine der oben beschriebenen, nach außen gerichteten Funkverbindungen einer stärkeren elektromagnetischen Strahlung und damit einer höheren Strahlenbelastung ausgesetzt sein kann als bei Verwendung von außenseitigen Antennen. Denn für eine nach außen gerichtete Funkverbindung sind bestimmte Signalstärken des Sendesignals notwendig. Für die Strahlenbelastung im Innenraum müssen dabei jedoch gesetzlich vorgeschriebene SAR-Werte (SAR abgekürzt für "spezifische Absorptionsrate") eingehalten werden, damit ein Fahrgast oder Insasse durch die Signalstärke keinen zu hohen elektromagnetischen Feldstärken ausgesetzt ist oder keiner zu hohen Strahlenbelastung ausgesetzt ist. Deshalb sieht man in Kraftfahrzeugen von der Verwendung von Innenraumantennen zum Senden von Funksignalen an fahrzeugexterne Funkeinrichtungen ab, um eine Strahlenbelastung von Insassen unterhalb eines vorbestimmten Grenzwertes zu gewährleisten oder vorbestimmte SAR-Werte in der Fahrgastzelle einzuhalten.

Aus der WO 2017/106816 A1 ist ein Ladesystem bekannt, mittels welchem in einem Kraftfahrzeug ein Smartphone Energie nachladen kann. Die Energie wird drahtlos als Funksignal übertragen, indem ein Array aus Antennen Richtstrahlen auf das Smartphone ausrichtet, die dann direkt oder indirekt auf eine Antenne des Smartphones treffen. Die Position von Fahrzeugpassagieren kann mittels Sitzbelegungssensoren erkannt werden und die Richtstrahlen können gezielt an belegten Sitzen vorbei ausgerichtet werden. Hierdurch sollen eine unnötige Strahlenbelastung von Personen und ein unnötiger Energieverlust vermieden werden.

Aufgabe der Erfindung ist es, eine Antenne für eine nach außen gerichtete Funkverbindung mit hoher Crashsicherheit in einem Kraftfahrzeug anzuordnen und dabei eine Sendeleistung der Antenne derart zu regeln, dass eine durch ein von der Antenne ausgehendes Funksignal bedingte Strahlenbelastung eines Insassen des Kraftfahrzeugs einen vorbestimmten Wert nicht überschreitet.

Die Aufgabe wird gelöst gemäß den unabhängigen Ansprüchen der Anmeldung. Vorteilhafte Weiterbildungen der Erfindung sind in den abhängigen Ansprüchen, der folgenden Beschreibung und den Figuren beschrieben.

Die Erfindung stellt dafür ein Verfahren zum Einstellen einer Sendeleistung für eine Funkverbindung von zumindest einer Antenne eines Kraftfahrzeugs zu zumindest einer fahrzeugexternen Funkeinrichtung bereit. Damit ist gemeint, dass verfahrensgemäß eine Sendeleistung für beispielsweise eine Mobilfunkverbindung zwischen dem Kraftfahrzeug und einem Mobilfunkmasten eingestellt oder geregelt wird. So kann über ein Auto-Telefon oder ein mit einem Bordcomputer des Kraftfahrzeugs verbundenes Smartphone eine Mobilfunkverbindung über die jeweilige Antenne des Kraftfahrzeugs aufgebaut werden. Das Auto-Telefon/Smartphone kann dafür ein bestimmtes Signal erzeugen, welches von der jeweiligen Antenne des Kraftfahrzeugs so abgestrahlt wird, dass es vom Mobilfunkmasten empfangen werden kann. Dabei kann die Signalstärke des von der jeweiligen Antenne abgestrahlten Sendesignals durch das Einstellen der korrespondierenden Sendeleistung an der jeweiligen Antenne oder ihrem Einspeisepunkt eingestellt oder geregelt werden. Es ist beispielsweise möglich, eine Sendeleistung höher einzustellen, wenn sich der Mobilfunkmast in einer größeren Entfernung vom Kraftfahrzeug befindet, als wenn er sich in einer geringeren Entfernung vom Kraftfahrzeug befindet.

Die Erfindung sieht zunächst vor, dass die zumindest eine Antenne jeweils eine Innenraumantenne ist oder als die zumindest eine Antenne jeweils eine Innenraumantenne verwendet wird.

Verfahrensgemäß signalisiert in einem Verfahrensschritt zumindest ein Sitzbelegungssensor des Kraftfahrzeugs eine Sitzbelegung eines jeweiligen Fahrzeugsitzes oder Sitzplatzes in einem jeweiligen Belegungssignal. Damit ist gemeint, dass mittels einem oder mehreren Sitzbelegungssensoren geprüft wird, ob sich auf einem oder mehreren Fahrzeugsitzen im Kraftfahrzeug je ein Insasse befindet. Um dies zu erkennen, sind Verfahren oder Vorrichtungen aus dem Stand der Technik zur Erkennung einer Belegung eines Sitzplatzes bekannt. Dabei kann beispielsweise jeder Fahrzeugsitz einen solchen bekannten Sensor aufweisen oder auf einer Rückbank des Kraftfahrzeugs je Sitzplatz ein jeweiliger Sensor bereitgestellt sein.

Es können in dem erfindungsgemäßen Verfahren auch beliebige andere Arten von Sitzbelegungssensoren verwendet werden, beispielsweise eine optische Erkennung durch eine Kamera im Innenraum des Kraftfahrzeugs. Ein Sitzbelegungssensor gibt beispielsweise zu einem belegten Fahrersitz oder Sitzplatz ein erstes Belegungssignal mit einem ersten Wert aus und zu einem unbelegten Fahrersitz oder Sitzplatz ein zweites Belegungssignal mit einem zweiten Wert aus. Das Belegungssignal enthält also eine Information darüber, welche Sitzplätze des Kraftfahrzeugs von Insassen besetzt sind.

Erfindungsgemäß wird in Abhängigkeit von dem Belegungssignal die jeweilige Sendeleistung an der zumindest einen Innenraumantenne des Kraftfahrzeugs geregelt. In dem beanspruchten Verfahren wird als Sendeantenne des Kraftfahrzeugs für die Funkverbindung zu einer fahrzeugexternen Funkeinrichtung also eine Innenraumantenne verwendet. Eine Innenraumantenne ist eine solche Antenne, die in einem Innenraum oder einer Fahrerkabine oder einer Fahrgastzelle des Kraftfahrzeugs angebracht ist. Eine Innenraumantenne kann beispielsweise zwischen einer Innenraumverkleidung und einem Fahrzeugdach positioniert sein oder zwischen einer Innenraumverkleidung und einer Fahrzeugtüre positioniert sein. Eine Innenraumantenne kann beispielsweise auch an einer Frontscheibe oder an einer anderen Fahrzeugscheibe des Kraftfahrzeugs positioniert sein oder beispielsweise an einer Hutablage des Kraftfahrzeugs positioniert sein. Eine Innenraumantenne zeichnet sich also im Allgemeinen dadurch aus, dass sie in einem selben Bereich der Fahrgastzelle des Kraftfahrzeugs angeordnet ist, in welchem sich auch Insassen oder Fahrgäste des Kraftfahrzeugs befinden, sodass sich für diese Innenraumantenne eine hohe Crashsicherheit ergibt. In dem Verfahren werden solche Innenraumantennen eines Kraftfahrzeugs also nicht nur zum Empfangen, sondern auch zum Senden von Funksignalen verwendet.

Um die Funkverbindung von der zumindest einen Innenraumantenne zu einer fahrzeugexternen Funkeinrichtung bereitzustellen, wird ein jeweiliges Funksignal an der jeweiligen Innenraumantenne bereitgestellt oder angelegt. Dieses Funksignal kann dabei in seiner Signalstärke variiert werden. Die Sendeleistung an der Innenraumantenne bestimmt, wie stark eine elektromagnetische Feldstärke des Funksignals oder Sendesignals ist, welches von der Innenraumantenne abgestrahlt wird und somit, wie stark eine Strahlenbelastung in einer bestimmten Entfernung von der Innenraumantenne ist.

Durch das Verfahren wird diese an der Innenraumantenne bereitgestellte Sendeleistung in Abhängigkeit von dem Belegungssignal geregelt. Das kann beispielweise bedeuten, dass dann, wenn das Belegungssignal signalisiert, dass sich ein Fahrgast auf dem Fahrersitz des Kraftfahrzeugs befindet, die Sendeleistung ganz abgeschaltet wird, also kein Signal abgestrahlt wird, und dann, wenn sich keine Fahrgäste oder Insassen im Kraftfahrzeug befinden, eine volle Sendeleistung eingestellt wird. Es ist auch möglich, dass dann, wenn das Belegungssignal signalisiert, dass sich nur ein Fahrer in dem Kraftfahrzeug befindet, die Sendeleistung auf einen ersten Wert geregelt wird und dann, wenn das Belegungssignal signalisiert, dass alle Sitzplätze des Kraftfahrzeugs belegt sind, das Sendesignal die Sendeleistung auf einen zweiten Wert geregelt wird.

Der Vorteil dabei ist, dass eine Innenraumantenne eines Kraftfahrzeugs dazu verwendet werden kann, eine Funkverbindung zu einer fahrzeugexternen Funkeinrichtung bereitzustellen, indem sie als Sendeantenne verwendet wird. Durch die Regelung der Sendeleistung in Abhängigkeit des Belegungssignals, also einer Belegung der Sitzplätze des Kraftfahrzeugs, ist es möglich, die Sendeleistung so zu regeln, dass eine Strahlenbelastung von Insassen des Kraftfahrzeugs unterhalb einer vorbestimmten Grenze bleibt. So kann vorteilhafterweise die Innenraumantenne etwa dann mit voller Sendeleistung eine Funkverbindung aufbauen oder betreiben, wenn sich gerade kein Fahrgast oder Insasse im Kraftfahrzeug befindet, da in diesem Fall kein Insasse einer Strahlenbelastung ausgesetzt ist. Wenn sich ein Insasse im Kraftfahrzeug befindet kann die Sendeleistung so geregelt werden, dass eine Strahlenbelastung genau an dem Sitzplatz, auf dem der jeweilige Insasse sitzt, den vorbestimmten Grenzwert nicht überschreitet. Somit ist es möglich, Antennen in einem Kraftfahrzeug einerseits crashsicher anzuordnen und andererseits sicherzustellen, dass eine Strahlenbelastung eines Fahrzeuginsassen einen vorbestimmten Grenzwert nicht überschreitet. Innenraumantennen bieten weiterhin Kostenvorteile, da sie weniger robust sein müssen und gewichtsmäßig leichter sein können als Außenantennen.

In dem Verfahren ist vorgesehen, dass die Sendeleistung an der jeweiligen Innenraumantenne in Abhängigkeit von einem Abstand eines Fahrzeugsitzes oder Sitzplatzes mit einer signalisierten Sitzbelegung zu einer jeweiligen Innenraumantenne reduziert wird. Dabei kann die Sendeleistung stufenweise, schrittweise oder kontinuierlich reduziert werden. Es ist sowohl eine vollständige Reduzierung bis auf eine Sendeleistung von Null Watt/keine Sendeleistung/kein Senden eines Funksignals möglich, als auch eine graduelle Reduzierung oder ein graduelles Dimmen oder Verringern der Sendeleistung möglich. Es ist also vorgesehen, dass zumindest eine Innenraumantenne verwendet wird, wobei jeder Fahrzeugsitz des Kraftfahrzeugs zu dieser Innenraumantenne einen bestimmten Abstand aufweist. Eine Innenraumantenne kann beispielsweise an einer Hutablage des Kraftfahrzeugs angebracht sein, so dass sie von einem Sitzplatz auf der Rückbank des Kraftfahrzeugs einen ersten Abstand aufweist und von einem Fahrersitz des Kraftfahrzeugs einen zweiten Abstand aufweist. Wenn in diesem Fall nun das Belegungssignal signalisiert, dass der Fahrersitz besetzt ist, kann die Sendeleistung dieser Innenraumantenne auf einen ersten Wert eingestellt werden. Wenn das Belegungssignal signalisiert, dass auch ein Sitzplatz auf der Rückbank belegt ist, kann die Sendeleistung der Innenraumantenne auf einen zweiten Wert eingestellt werden, welcher geringer ist als der erste Wert, da die Rückbank näher an der Innenraumantenne positioniert ist, sodass dort eine Strahlenbelastung bei gleicher Sendeleistung höher wäre als am Fahrersitz. Der Vorteil dabei ist, dass immer, wenn allein der Fahrersitz belegt ist, aufgrund der höheren Distanz oder des höheren Abstandes des Fahrers zu der Innenraumantenne an der Hutablage eine Sendeleistung höher eingestellt werden kann, ohne dass eine Strahlenbelastung des Fahrers den vorbestimmten Wert überschreitet. Wenn hingegen auch Insassen auf der Rückbank sitzen, kann die Sendeleistung reduziert oder verringert werden, wobei die Reduzierung oder Verringerung der Sendeleistung schrittweise oder stufenlos erfolgen kann, sodass auch die Strahlenbelastung der Insassen auf der Rückbank den vorbestimmten Grenzwert nicht überschreitet. Dadurch ergibt sich der Vorteil, dass über die Innenraumantenne stets ein Sendesignal oder Funksignal mit einer größtmöglichen Signalstärke oder einer größtmöglichen Sendeleistung gesendet werden kann, um eine möglichst gute Funkverbindung zu gewährleisten. Der Abstand zu einer jeweiligen Innenraumantenne muss dabei nicht gleichförmig oder konzentrisch um die Innenraumantenne sein, er kann auch von einer Richtwirkung oder Antennencharakteristik der jeweiligen Innenraumantenne abhängen. So ist es beispielsweise möglich, dass eine Innenraumantenne in der Mitte der Hutablage des Kraftfahrzeugs positioniert ist, wobei auf Grundlage der Antennencharakteristik eine Sendeleistung dann stark reduziert wird, wenn der Mittelsitz der Rückbank des Kraftfahrzeug belegt ist, die Sendeleistung aber auf den vollen Wert eingestellt werden kann, wenn ein linker oder ein rechter Sitzplatz der Rückbank belegt ist, ohne dass eine Strahlenbelastung zu hoch ist. Durch die Antennencharakteristik ist es möglich, dass eine Strahlenbelastung durch ein Sendesignal von einer Innenraumantenne auch dann den vorbestimmten Wert nicht überschreitet, wenn ein Sitzplatz relativ nahe zur Antenne angeordnet ist, sich dabei jedoch in einem vorbestimmten, vorteilhaften Winkel bezüglich der Antennenausrichtung befindet. Auf diese Weise können Innenraumantennen vorteilhaft so angeordnet werden, dass ihre Sendeleistung dann nicht reduziert werden muss, wenn Sitzplätze des Kraftfahrzeugs belegt sind, die relativ häufig, als mit einer hohen Wahrscheinlichkeit, bei einer Fahrt des Kraftfahrzeugs belegt sind.

Weitere Vorteile der Erfindung ergeben sich durch Weiterbildungen des erfindungsgemäßen Verfahrens.

Eine Weiterbildung des Verfahrens sieht vor, dass dann, wenn eine Sitzbelegung innerhalb eines vorbestimmten Sicherheitsabstandes einer ersten Innenraumantenne signalisiert wird, ein entsprechender Schalter eines Sendepfades so eingestellt wird, dass die Sendeleistung in zumindest eine von der ersten Innenraumantenne verschiedene Innenraumantenne eingespeist wird, bei welcher keine entsprechende Sitzbelegung innerhalb eines vorbestimmten Abstandes signalisiert wird. In anderen Worten sind in dem Kraftfahrzeug zumindest zwei Innenraumantennen angeordnet, die zumindest bezüglich eines Sitzplatzes zu diesem verschiedene Abstände einnehmen. Beispielsweise kann eine erste Innenraumantenne an der Frontscheibe des Kraftfahrzeugs in einer Nähe des Fahrersitzes angeordnet sein und eine zweite Innenraumantenne auf der Hutablage des Kraftfahrzeugs angeordnet sein. Wenn nun das Belegungssignal signalisiert, dass der Fahrersitz belegt ist, also eine Sitzbelegung innerhalb des vorbestimmten Sicherheitsabstandes der ersten Innenraumantenne an der Frontscheibe signalisiert wird, kann ein Schalter so eingestellt werden, dass die Funkverbindung über die zweite Innenraumantenne stattfindet, welche z.B. an der Hutablage positioniert ist. Die erste Innenraumantenne wird also vollständig deaktiviert oder weggeschaltet. Der Fahrersitz befindet sich also in diesem Fall nicht innerhalb des vorbestimmten Sicherheitsabstandes zur zweiten Innenraumantenne, sodass die Strahlenbelastung des Insassen auf dem Fahrersitz durch das Sendesignal, welches von der zweiten Innenraumantenne abgestrahlt wird den vorbestimmten Grenzwert nicht überschreitet. Der Vorteil an dieser Weiterbildung ist, dass stets diejenige Innenraumantenne für die Funkverbindung verwendet werden kann, welche sich am weitesten von allen Fahrzeuginsassen des Kraftfahrzeugs befindet, so dass an dieser Innenraumantenne eine möglichst hohe Sendeleistung angelegt werden kann.

Eine Weiterbildung des Verfahrens sieht vor, dass die Sendeleistung mittels einer Einstellung eines Sendeverstärkers eines Sendepfades einer jeweiligen Innenraumantenne geregelt wird. Die Signalstärke des Funksignals, welches von der jeweiligen Innenraumantenne abgestrahlt wird, hängt davon ab, wie sehr ein Sendeverstärker des Sendepfades, mit welchem die jeweilige Innenraumantenne verbunden ist, dass abzustrahlende Signal verstärkt. Eine Einstellung der Signalstärke und damit der von der Innenraumantenne abgestrahlten elektromagnetischen Feldstärke kann somit durch den jeweiligen Sendeverstärker eingestellt werden. Wenn ein Belegungssignal eine Belegung eines Fahrzeugsitzes signalisiert, wobei dadurch Sendeleistung verringert werden soll, kann dies durch eine entsprechende Einstellung des Sendeverstärkers geschehen, welcher entsprechend eine Verstärkung verringert. Der Vorteil dabei ist, dass mit einer geringeren Leistung des Sendeverstärkers dieser auch nur eine geringere Energieaufnahme aufweist, sodass durch diese Einstellung nicht nur die Strahlenbelastung des jeweiligen Fahrzeuginsassen den vorbestimmten Grenzwert nicht überschreitet, sondern gleichzeitig auch ein Energieverbrauch für die jeweilige Funkverbindung gering gehalten wird.

Eine Weiterbildung des Verfahrens sieht vor, dass die Sendeleistung durch ein jeweiliges Einfügen eines Dämpfungsgliedes in einen zu der jeweiligen Innenraumantenne führenden Sendepfad geregelt wird. In diesem Fall kann die Einstellung an einem Sendeverstärker des Sendepfades gleich bleiben und die abgestrahlte elektromagnetische Feldstärke kann dadurch verringert werden, dass ein entsprechendes Dämpfungsglied in den Sendepfad eingefügt wird, an welchem ein Teil der Leistung des an die Innenraumantenne angelegten Signals abfällt, sodass das Signal nicht mit voller Leistung abgestrahlt wird. Der Vorteil daran ist, dass diese Lösung besonders einfach ausführbar ist und auch ein bereits vorhandenes Sendesystem dadurch einfach nachgerüstet werden kann, so dass es verfahrensgemäß betrieben kann werden kann.

In einer Weiterbildung ist vorgesehen, dass das Belegungssignal entweder direkt an eine Sendevorrichtung übermittelt wird oder ein Bordcomputer das Belegungssignal an eine jeweilige Sendevorrichtung übermittelt. Eine solche Sendevorrichtung ist dazu ausgebildet, ein jeweiliges Sendesignal in eine Innenraumantenne des Kraftfahrzeugs einzuspeisen, so dass es von dieser Innenraumantenne abgestrahlt wird. Es handelt sich also um die Sendeelektronik. Wenn das Belegungssignal direkt an die Sendevorrichtung übermittelt wird, ergibt sich der Vorteil, dass eine solche Sendevorrichtung mit zugehörigen Sitzbelegungssensoren besonders einfach in einem Kraftfahrzeug nachgerüstet werden kann und dass eine Sendeleistung auch dann reduziert wird, wenn beispielsweise ein Fehler im Bordcomputer vorliegen sollte, da das Belegungssignal unabhängig von einer weiteren Recheneinrichtung an die Sendevorrichtung übermittelt wird. Wenn das Belegungssignal über einen Bordcomputer an die jeweilige Sendevorrichtung übermittelt wird, ergibt sich der Vorteil, dass in diesem Fall bereits vorhandene Sitzbelegungssensoren besonders einfach auch für die Ausführung des erfindungsgemäßen Verfahrens verwendet werden können.

Eine Weiterbildung des Verfahrens sieht vor, dass die in Abhängigkeit von dem jeweiligen Belegungssignal einzuregelnde Sendeleistung in einem Kalibrierschritt durch zumindest eine Messung einer elektromagnetischen Feldstärke an zumindest einem jeweiligen Sitzplatz ermittelt wird. Durch die jeweilige elektromagnetische Feldstärke ergibt sich die Strahlenbelastung für einen Insassen, der auf dem Sitzplatz sitzt, an dem die Messung durchgeführt wird. Es wird also in einem Messschritt ermittelt, wie stark eine Sendeleistung von einer Innenraumantenne eingestellt werden kann, sodass an dem jeweiligen Messplatz/Sitzplatz die Strahlenbelastung den vorbestimmten Grenzwert nicht überschreitet. Vorteilhaft kann so ermittelt werden, wie eine jeweilige Sendeleistung eingestellt werden kann, sodass gerade der vorbestimmte Grenzwert der Strahlenbelastung am jeweiligen Sitzplatz mit zugehörigem Sitzbelegungssensor nicht überschritten wird. Dadurch wird gewährleistet, dass die Funkverbindung von ganz unterschiedlichen Kraftfahrzeugen mit unterschiedlichen Innenraumantennen und Fahrgastzellen stets mit der höchstmöglichen Sendeleistung aufgebaut werden kann.

In einer Weiterbildung des Verfahrens ist vorgesehen, dass die als Innenraumantenne eine Bluetooth-Antenne und/oder WLAN-Antenne und/oder Mobilfunkantenne verwendet wird. Somit ergibt sich der Vorteil, dass das erfindungsgemäße Verfahren für eine Vielzahl von Funkverbindungen, welche vom Kraftfahrzeug mit einer fahrzeugexternen Funkeinrichtung aufgebaut werden können, angewendet werden kann.

Zur Erfindung gehört auch eine Regelvorrichtung für ein Kraftfahrzeug, die dazu ausgestaltet ist, eine Sendeleistung an zumindest einer Antenne des Kraftfahrzeugs regeln. Die Regelvorrichtung ist dazu ausgebildet, eine Information über eine Sitzbelegung des Kraftfahrzeugs von einem jeweiligen Sensor übermittelt zu bekommen. Die Regelvorrichtung ist dazu ausgestaltet, eine jeweilige Sendeleistung in Abhängigkeit von der Sitzbelegung gemäß dem beschriebenen Verfahren zu regeln. Eine solche Regelvorrichtung kann also, wenn sie in ein Kraftfahrzeug mit einer Innenraumantenne und einem Sitzbelegungssensor eingebaut ist, das erfindungsgemäße Verfahren durchführen.

Zur Erfindung gehört weiterhin ein Kraftfahrzeug mit einer erfindungsgemäßen Regelvorrichtung. Die Regelvorrichtung ist dabei mit zumindest einer Innenraumantenne und zumindest einem Sitzbelegungssensor des Kraftfahrzeugs gebunden. Die Regelvorrichtung kann auch durch einen zentralen Bordcomputer des Kraftfahrzeugs realisiert oder ausgebildet sein. Daraus ergibt sich der Vorteil, dass eine bereits vorhandene Recheneinrichtung das erfindungsgemäße Verfahren durchführen kann, sodass keine weitere Hardware oder Elektronikbauteile im Kraftfahrzeug benötigt werden.

Zu der Erfindung gehören auch Weiterbildungen der erfindungsgemäßen Regelvorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Regelvorrichtung und des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: ein Kraftfahrzeug mit verschiedenen Antennen und Sitzbelegungssensoren gemäß dem Stand der Technik;
- Fig. 2: ein erfindungsgemäßes Kraftfahrzeug mit Innenraumantennen, einer Regelvorrichtung und Sitzbelegungssensoren;
- Fig. 3: eine Regelvorrichtung mit Sitzbelegungssensoren und Innenraumantennen; und
- Fig. 4: ein schematisches Diagramm einer jeweiligen Sendeleistung an zwei Innenraumantennen in Abhängigkeit eines Zeitverlaufes.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

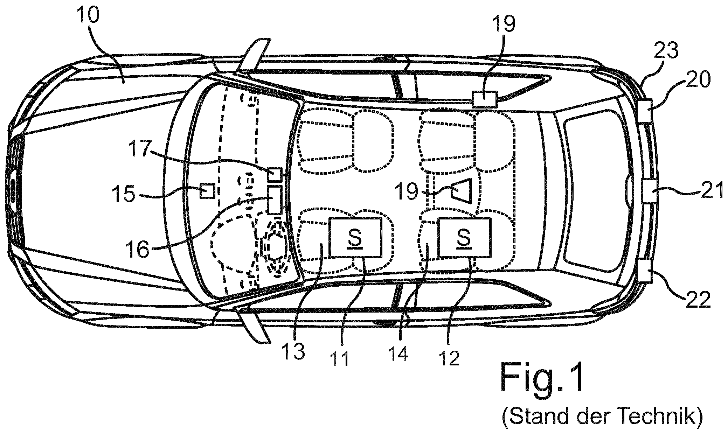

Fig. 1 zeigt dabei ein aus dem Stand der Technik bekanntes Kraftfahrzeug 10 mit verschiedenen Funkantennen und mit Sitzbelegungssensoren 11, 12 ausgestatteten Fahrzeugsitzen 13, 14. Das Kraftfahrzeug 10 weist dabei in einem Innenraum des Kraftfahrzeugs 10 positionierte Antennen 15, 16, 17, 19 auf, welche zum Empfangen von Funksignalen ausgestaltet sind. Das Kraftfahrzeug 10 weist weiterhin Antennen 20, 21, 22 auf, welche sich außerhalb des Fahrzeuginnenraumes befinden und an einem hinteren Stoßfänger 23 des Kraftfahrzeugs 10 angeordnet sind.

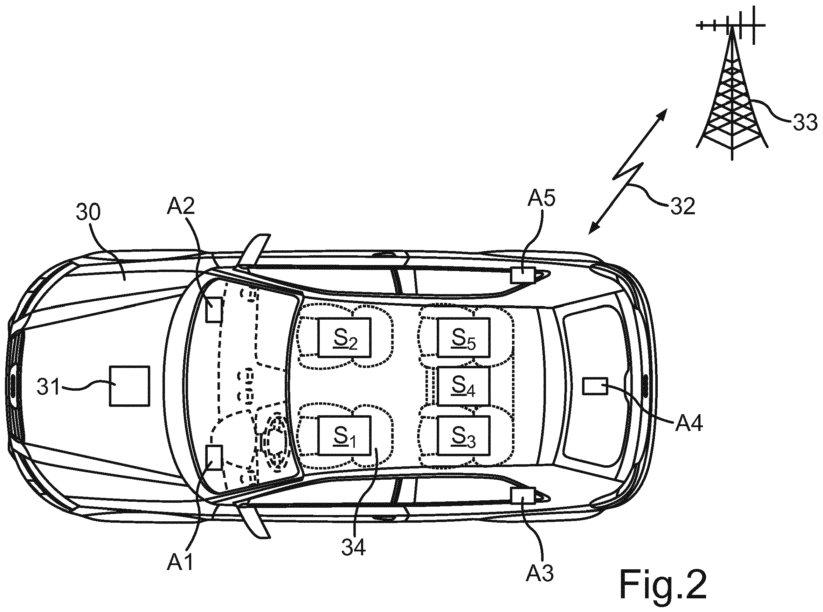

Fig. 2 zeigt ein erfindungsgemäßes Kraftfahrzeug 30 mit Innenraumantennen A1, A2, A3, A4, A5, einer Regelvorrichtung 31 und Sitzbelegungssensoren S1, S2, S3, S4, und S5, welche jeweils einem Fahrzeugsitz zugeordnet sind. Der Sitzbelegungssensor S1 ist beispielsweise dem Fahrzeugsitz 34 zugeordnet. Über eine oder mehrere der Innenraumantennen kann das Kraftfahrzeug 30 eine Funkverbindung 32 zu einer externen Funkeinrichtung 33 aufbauen oder bereitstellen. Die externe Funkeinrichtung 33 ist eine solche Funkeinrichtung, welche sich außerhalb des Kraftfahrzeugs 30 befindet. Sie kann beispielsweise eine WLAN-Einrichtung, welche öffentlich zugänglich sein, beispielsweise in einem Parkhaus oder an einer Tankstelle, oder ein Mobilfunkmast sein.

Jede der Antennen A1 bis A5 weist einen bestimmten Abstand zu einem durch einen Sitzbelegungssensor S1 bis S5 gekennzeichneten Fahrzeugsitz oder Sitzplatz auf. Die Antenne A1 weist z.B. einen geringeren Abstand zum Fahrzeugsitz 34 mit Sitzbelegungssensor S1 auf, als Sitzplatz mit Sitzbelegungssensor S5. Es kann sich z.B. nur der Fahrzeugsitz mit Sitzbelegungssensor S3 innerhalb eines Abstandes von Antenne A3 befinden, bei welchem eine Sendeleistung an A3 bei einer Belegung des Sitzplatzes mit S3 reduziert werden muss.

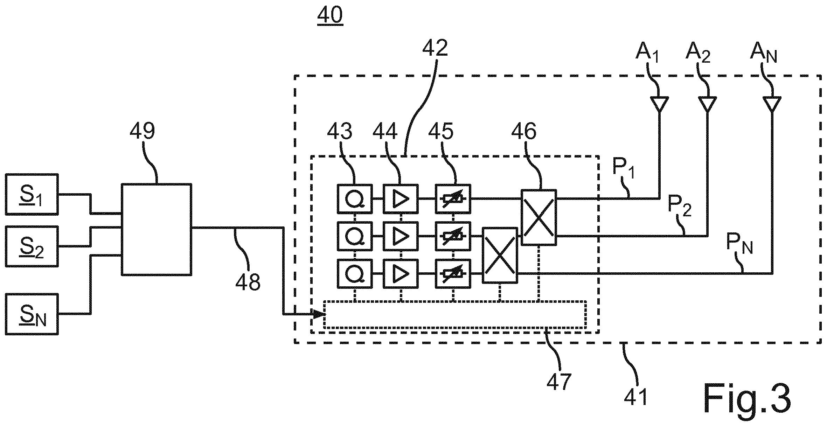

Fig. 3 zeigt eine Regelvorrichtung 40, welche Sitzbelegungssensoren S1, S2 bis SN sowie Innenraumantennen A1, A2 bis AN aufweist. Die Innenraumantennen sind Teil einer Sende- und Empfangseinheit 41, und sind je über einen korrespondierenden Signalpfad P1, P2 bis PN mit einer Sendevorrichtung 42 verbunden. Die Sendevorrichtung 42 weist pro Signalpfad je eine Hochfrequenzsignalquelle 43, einen Hochfrequenzverstärker 44 und ein Einfügeglied 45 auf. Zwischen je zwei Signalpfaden kann ein Hochfrequenzschalter 46 bereitgestellt sein. Die Sendevorrichtung 42 weist eine Steuereinheit 47 auf, mittels derer die Komponenten der Sendevorrichtung 42 gesteuert werden. Die Steuereinheit 47 ist dazu ausgebildet, ein Belegungssignal 48 zu empfangen, welches von einer Sensorsteuerung 49 erzeugt wird. Die Sensorsteuerung erzeugt das Belegungssignal 48 in Abhängigkeit von den Sitzbelegungssensoren S1, S2 bis SN, sodass in dem Belegungssignal 48 eine Information darüber übermittelt wird, welcher der Fahrzeugsitze des Kraftfahrzeugs mit der Regelvorrichtung 40 belegt ist.

Die Sensoren S1 bis SN können in an sich bekannter Weise ausgestaltet sein. So sind z.B. aus der DE 10 2013 201 836 A1 ein Verfahren und eine Vorrichtung zur Anwesenheitserkennung von Objekten in einer Fahrgastzelle eines Fahrzeugs bekannt. Das Verfahren bietet eine Alternative zur Erkennung mittels Sitzbelegungsmatten oder Ultraschallvorrichtungen. Dazu werden elektromagnetische Signale in die Fahrgastzelle gesendet, von dort vorhandenen Objekten reflektiert, wieder empfangen und schließlich hinsichtlich einer Objekteigenschaft ausgewertet.

Aus der EP 2 529 981 A1 ist bekannt, wie ein Belegungszustand eines Sitzplatzes detektiert werden kann. Dazu sind unter dem Sitzplatz zwei benachbarte Antennen angebracht. Bei Anwesenheit eines proximalen (menschlichen) Körpers wird in einer Messung eine charakteristische Veränderung der elektromagnetischen Kopplung der Antennen erfasst und somit detektiert, dass der Sitzplatz belegt ist.

Aus der DE 10 2004 050 884 B3 ist eine Sitzbelegung-Erkennungsvorrichtung bekannt. Dazu ist in einem Sitz sowohl mindestens eine Sendeeinrichtung als auch mindesten eine Empfangseinrichtung an einer derart von der mindesten einen Sendeeinrichtung beabstandeten Position in dem Sitz angeordnet, dass sich ein auf dem Sitz befindliche Person zumindest teilweise in dem Signalweg zwischen der mindestens einen Sendeeinrichtung und der mindestens einen Empfangseinrichtung für eine Beeinflussung der Signale in Abhängigkeit der Sitzbelegung befindet.

Wenn ein Sitzplatz mit S1 belegt ist, kann beispielsweise ein Hochfrequenzschalter 46 zwischen P1 und P2 so geschaltet werden, dass das abzustrahlende Funksignal für eine Funkverbindung von A2 abgestrahlt wird. Der Sitz mit S2 ist in diesem Anwendungsfall unbelegt. Es ist alternativ oder zusätzlich möglich, eine Verstärkung des Hochfrequenzverstärkers 46, der mit A1 verbunden über P1 verbunden ist, zu reduzieren oder ein Einfügeglied 45 in P1 einzufügen, um eine von A1 abgestrahlte Signalstärke zu reduzieren.

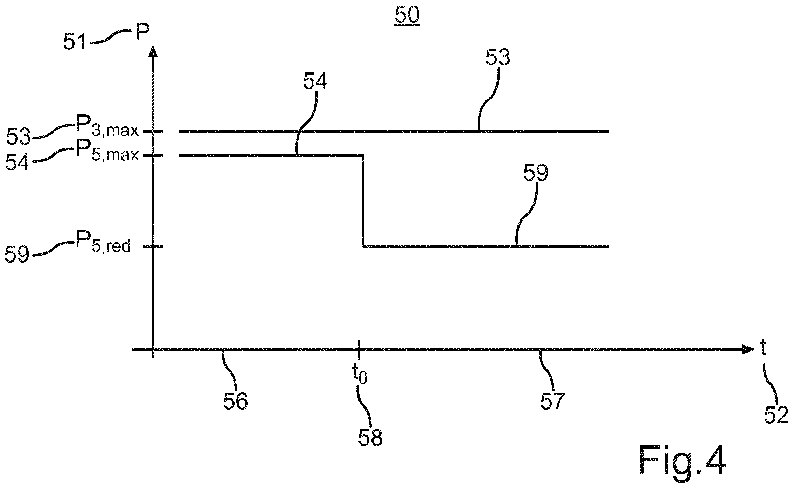

Fig. 4 zeigt ein schematisches Diagramm 50 einer jeweiligen Sendeleistung 51 an zwei Innenraumantennen A3, A5 in Abhängigkeit eines Zeitverlaufes 52. Die Innenraumantennen A3 und A5 entsprechen dabei den Innenraumantennen des Kraftfahrzeugs 30 aus Fig. 2. An der Innenraumantenne A3 kann eine maximale Sendeleistung 53 angelegt werden, an der Innenraumantenne A5 eine maximale Sendeleistung 54. In einem ersten Zeitraum 56 sind die beiden Fahrzeugsitze des Kraftfahrzeugs 30 aus Fig. 2 den Sitzbelegungssensoren S3 und S5 unbelegt. In einem zweiten Zeitraum 57 ist der Fahrzeugsitz mit dem Sitzbelegungssensor S3 weiterhin unbelegt, der Fahrzeugsitz mit dem Sitzbelegungssensor S5 ist jedoch belegt. Die beiden Zeiträume 56 und 57 getrennt durch den Zeitpunkt 58, zu dem sich ein Insasse auf den Fahrzeugsitz mit dem Sitzbelegungssensor S5 setzt. Im Zeitraum 56 beträgt eine an der Antenne A3 angelegte Sendeleistung der maximalen Sendeleistung 53 und eine an der Innenraumantennen A5 angelegte Sendeleistung der maximalen Sendeleistung 54. Im Zeitraum 57 würde durch eine weiterhin an der Antenne A5 angelegte maximale Sendeleistung 54 eine Strahlenbelastung des zu gestiegenen Insassen einen vorbestimmten Grenzwert überschreiten. Daher wird verfahrensgemäß zu dem Zeitpunkt 58, zu dem sich der Fahrzeuginsasse auf den Sitzplatz mit dem Sitzbelegungssensor S5 setzt, eine an der Innenraumantennen A5 angelegte Sendeleistung reduziert, so dass nun an der Innenraumantennen A5 im Zeitraum 57 eine reduzierte Sendeleistung 59 anliegt. Dadurch ist es möglich, die Antenne A5 weiterhin zu benutzen und eine Strahlenbelastung innerhalb eines vorbestimmten Bereichs zu halten.

Gemäß einem besonders bevorzugten Ausführungsbeispiel werden Antennen in einem Kraftfahrzeug bereitgestellt, welche eine Funkverbindung zu einer fahrzeugexternen Funkeinrichtung herstellen können und gleichzeitig crashsicher sind. Die Antennen können beispielsweise für fahrzeugbezogene Notrufdienste genutzt werden, da sie beispielsweise auch bei einem Unfall des Kraftfahrzeugs weiterhin funktionieren. Die zu einer Sende- und Empfangseinheit zugehörigen Antennen können abgesetzte oder integrierte Antennen sein und sind in einem Fahrzeuginnenraum positioniert. Die Sende- und Empfangseinheit wird über ein Sensorsignal eines Sitzbelegungssensors derart gesteuert, dass eine Strahlenbelastung von einem Fahrzeuginsassen auf dem jeweiligen Sitzplatz des Sitzbelegungssensors durch von der Antenne ausgehende elektromagnetische Felder minimiert wird, dabei aber die Antennenfunktion aufrechterhalten bleibt. In Abhängigkeit von einer Sitzbelegung im Kraftfahrzeug wird eine Sendeleistung an einem jeweiligen Antennen-Einspeisepunkt geregelt. Durch den Sitzbelegungssensor wird erkannt, ob sich ein Fahrzeuginsasse in unmittelbarer Nähe, also innerhalb eines vorbestimmten Abstandes, der verbauten Sendeantenne oder Innenraumantennen befindet. Das Sensorsignal des jeweiligen Sitzbelegungssensors wird als Trigger genutzt, um eine jeweilige Hochfrequenzkomponente der Sendeeinheit zu steuern, wobei eine Hochfrequenzkomponente eine Quelle, ein regelbarer Verstärker, ein regelbares Dämpfungsglied oder ein Schalter sein kann. Dadurch ist es möglich, die Sendeleistung zu regeln oder beispielsweise ein Sendesignal eines ersten Pfades mit einer ersten Antenne auf einen zweiten Pfad mit einer zweiten Antenne umzuschalten, wenn sich kein Insasse in unmittelbarer Nähe der zweiten Antenne befindet. Die Vorteile des erfindungsgemäßen Verfahrens sind, dass eine Strahlenbelastung eines Insassen, bzw. ein SAR-Wert an einem Fahrzeugsitz reduziert wird, wenn ein jeweiliger Fahrzeugsitz von dem Fahrzeuginsassen belegt ist. Somit wird die Strahlenbelastung auf ein Minimum reduziert und gleichzeitig eine Antennenfunktion oder die Möglichkeit einer Funkverbindung aufrechterhalten. Weitere Vorteile dabei sind, dass in einem Innenraum eines Kraftfahrzeugs eingebaute Antennen zu erheblichen Kosteneinsparungen führen, da solche Antennen in einem Trockenbereich keinen extremen Umweltbedingungen ausgesetzt sind wie etwa an einem Stoßfänger. Weiterhin sind Innenraumantennen so verbaubar, dass sie nicht sichtbar sind und gleichzeitig vor Vandalismus geschützt. Insbesondere durch die Sitzbelegungssensoren ergibt sich kein merklicher finanzieller Mehraufwand, da es bekannte kostengünstige Lösungen gibt und/oder in vielen Kraftfahrzeugen bereits Sitzbelegungssensoren verbaut sind, welche verfahrensgemäß wieder verwendet werden können. Innenraumantennen weisen weiterhin ein geringeres Gewicht auf als entsprechende Dachantennen oder Stoßfänger-Antennen, sodass ein Kraftfahrzeuggewicht reduziert werden kann.

Insgesamt zeigen die Beispiele, wie durch die Erfindung eine Innenraumantenne auch als Sendeantenne verwendet werden kann, um eine Funkverbindung zu einer fahrzeugexternen Funkeinrichtung herzustellen und gleichzeitig eine Strahlenbelastung von Insassen des Kraftfahrzeugs unterhalb eines vorbestimmten Grenzwertes gehalten wird. Dafür wird erfindungsgemäß eine an eine Innenraumantenne angelegte Sendeleistung in Abhängigkeit von einer Sitzplatzbelegung des Kraftfahrzeugs geregelt.

## Patentansprüche

1. Verfahren zur Regelung einer Sendeleistung (51) für eine Funkverbindung (32) von zumindest einer Antenne (A1, A2, AN) eines Kraftfahrzeugs (30) zu zumindest einer Funkeinrichtung (33), wobei
- als die zumindest eine Antenne jeweils eine Innenraumantenne verwendet wird,
- zumindest ein Sitzbelegungssensor (S1, S2, SN) des Kraftfahrzeugs eine Sitzbelegung eines jeweiligen Fahrzeugsitzes (34) mittels eines jeweiligen Belegungssignals (48) signalisiert,
- in Abhängigkeit von dem Belegungssignal (48) die jeweilige Sendeleistung (51) an der zumindest einen Innenraumantenne (A1, A2, AN) geregelt wird, und
- die Sendeleistung (51) an der jeweiligen Innenraumantenne (A1, A2, AN) in Abhängigkeit von einem Abstand eines Fahrzeugsitzes (34) oder Sitzplatzes mit einer signalisierten Sitzbelegung zu einer jeweiligen Innenraumantenne (A1, A2, AN) stufenweise oder kontinuierlich reduziert wird,
**dadurch gekennzeichnet, dass**
die zumindest eine Funkeinrichtung (33) eine fahrzeugexterne Funkeinrichtung (33) ist, und
der Abstand zu einer jeweiligen Innenraumantenne nicht gleichförmig oder konzentrisch um die Innenraumantenne ist, sondern von einer Richtwirkung oder Antennencharakteristik der jeweiligen Innenraumantenne abhängt.

2. Verfahren nach Anspruch 1, wobei dann, wenn eine Sitzbelegung innerhalb eines vorbestimmten Sicherheitsabstandes einer ersten Innenraumantenne (A1) signalisiert wird, ein entsprechender Schalter (46) eines Sendepfades (P1, P2, PN) so eingestellt wird, dass die Sendeleistung (51) in zumindest eine von der ersten Innenraumantenne (A1) verschiedene Innenraumantenne (A2, AN) eingespeist wird, bei welcher keine entsprechende Sitzbelegung signalisiert wird.

3. Verfahren nach einem der vorhergehenden Ansprüche, wobei die Sendeleistung (51) mittels einer Einstellung eines Sendeverstärkers (44) eines Sendepfades (P1, P2, PN) einer jeweiligen Innenraumantenne (A1, A2, AN) geregelt wird.

4. Verfahren nach einem der vorhergehenden Ansprüche, wobei die Sendeleistung (51) durch ein jeweiliges Einfügen eines Dämpfungsgliedes (45) in einen zu der jeweiligen Innenraumantenne (A1, A2, AN) führenden Sendepfad (P1, P2, PN) geregelt wird.

5. Verfahren nach einem der vorhergehenden Ansprüche, wobei das Belegungssignal (48) direkt an eine Sendevorrichtung (42, 47), die zum Einspeisen eines Sendesignals in die jeweilige Innenraumantenne (A1, A2, AN) ausgebildet ist, übermittelt wird oder ein Bordcomputer das Belegungssignal (48) an eine jeweilige Sendevorrichtung (42, 47) übermittelt.

6. Verfahren nach einem der vorhergehenden Ansprüche, wobei die in Abhängigkeit von dem jeweiligen Belegungssignal (48) einzuregelnde Sendeleistung (51) in einem Kalibrierschritt durch zumindest eine Messung einer elektromagnetischen Feldstärke an zumindest einem jeweiligen Sitzplatz (34) ermittelt wird.

7. Verfahren nach einem der vorhergehenden Ansprüche, wobei als Innenraumantenne (A1, A2, AN) eine Bluetooth-Antenne und/oder WLAN-Antenne und/oder Mobilfunk-Antenne verwendet wird.

8. Regelvorrichtung (40) für ein Kraftfahrzeug (30), die dazu ausgestaltet ist, eine Sendeleistung (51) an zumindest einer Antenne (A1, A2, AN) des Kraftfahrzeugs (30) zu regeln,
**dadurch gekennzeichnet, dass**
die Regelvorrichtung (40) dazu ausgestaltet ist, eine jeweilige Sendeleistung (51) an zumindest einer Innenraumantenne (A1, A2, AN) in Abhängigkeit von einer Sitzbelegung gemäß einem Verfahren gemäß einem der Ansprüche 1 bis 7 zu regeln, wobei eine Information über die Sitzbelegung von einem Sensor (S1, S2, SN) des Kraftfahrzeugs (30) und/oder der Regelvorrichtung (40) bereitgestellt ist.

9. Kraftfahrzeug (30) mit einer Regelvorrichtung (40) nach Anspruch 8,
**dadurch gekennzeichnet, dass**
eine Sendeleistung (51) an zumindest einer Innenraumantenne (A1, A2, AN) des Kraftfahrzeugs (30) mittels der Regelvorrichtung (40) gemäß einem Verfahren gemäß einem der Ansprüche 1 bis 7 regelbar ist.

## Claims

1. Method for controlling a transmission power (51) for a radio connection (32) from at least one antenna (A1, A2, AN) of a motor vehicle (30) to at least one radio device (33), wherein
- as the at least one antenna, respectively one interior antenna is used,
- at least one seat occupation sensor (S1, S2, SN) of the motor vehicle signalises a seat occupation of a respective vehicle seat (34) by means of a respective occupation signal (48),
- depending on the occupation signal (48) the respective transmission power (51) at the at least one interior antenna (A1, A2, AN) is regulated, and
- the transmission power (51) at the respective interior antenna (A1, A2, AN) is reduced in step-wise or continuous manner depending on a distance of a vehicle seat (34) or seat with a signalised seat occupation to a respective interior antenna (A1, A2, AN),
**characterised in that**
the at least one radio device (33) is a radio device (33) external to the vehicle, and
the distance to a respective interior antenna is not uniform or concentric about the interior antenna but rather depends on a directionality or antenna characteristic of the respective interior antenna.

2. Method according to claim 1 wherein when a seat occupation is signalised within a predetermined safety clearance of a first interior antenna (A1), a corresponding switch (46) of a transmission path (P1, P2, PN) is set such that the transmission power (51) is fed into at least one interior antenna (A2, AN), different from the first interior antenna (A1), in the case of which no corresponding seat occupation is signalised.

3. Method according to any of the preceding claims, wherein the transmission power (51) is regulated by means of an adjustment of a transmission amplifier (44) of a transmission path (P1, P2, PN) of a respective interior antenna (A1, A2, AN).

4. Method according to any of the preceding claims, wherein the transmission power (51) is regulated by means of a respective insertion of an attenuator (45) into a transmission path (P1, P2, PN) leading to the respective interior antenna (A1, A2, AN).

5. Method according to any of the preceding claims, wherein the occupation signal (48) is transmitted directly to a transmission device (42, 47), which is configured to feed-in a transmission signal into the respective interior antenna (A1, A2, AN), or an onboard computer transmits the occupation signal (48) to a respective transmission device (42, 47).

6. Method according to any of the preceding claims, wherein the transmission power (51) to be adjusted depending on the respective occupation signal (48) is determined by at least one measurement of an electromagnetic field strength at at least one respective seat (34).

7. Method according to any of the preceding claims, wherein as interior antenna (A1, A2, AN) is used a Bluetooth antenna and/or WLAN antenna and/or mobile radio antenna.

8. Control device (40) for a motor vehicle (30) which is configured to control a transmission power (51) at at least one antenna (A1, A2, AN) of the motor vehicle (30),
**characterised in that**
the control device (40) is configured to control a respective transmission power (51) at at least one interior antenna (A1, A2, AN) depending on a seat occupation according to a method according to any of claims 1 to 7, wherein an item of information regarding the seat occupation is made available by a sensor (S1, S2, SN) of the motor vehicle (30) and/or the control device (40).

9. Motor vehicle (30) having a control device (40) according to claim 8,
**characterised in that**
a transmission power (51) at at least one interior antenna (A1, A2, AN) of the motor vehicle (30) can be regulated by means of the control device (40) according to a method according to any of claims 1 to 7.

## Revendications

1. Procédé de régulation d'une puissance d'émission (51) pour une liaison radio (32) depuis au moins une antenne (A1, A2, AN) d'un véhicule à moteur (30) vers au moins un dispositif radio (33), dans lequel
- une antenne intérieure est utilisée comme au moins une antenne,
- au moins un capteur d'occupation de siège (S1, S2, SN) du véhicule à moteur signale une occupation de siège d'un siège de véhicule respectif (34) au moyen d'un signal d'occupation respectif (48),
- en fonction du signal d'occupation (48), la puissance d'émission respective (51) est régulée sur l'au moins une antenne intérieure (A1, A2, AN), et
- la puissance d'émission (51) sur l'antenne intérieure respective (A1, A2, AN) est réduite progressivement ou en continu en fonction de la distance entre un siège de véhicule (34) ou un siège à occupation signalée et une antenne intérieure respective (A1, A2, AN),
**caractérisé en ce que**
l'au moins un dispositif radio (33) est un dispositif radio (33) extérieur au véhicule, et
la distance avec une antenne intérieure respective n'est pas uniforme ou concentrique autour de l'antenne intérieure, mais dépend d'une directivité ou d'une caractéristique d'antenne de l'antenne intérieure respective.

2. Procédé selon la revendication 1, dans lequel, lorsqu'une occupation de siège est signalée sous une distance de sécurité prédéterminée d'une première antenne intérieure (A1), un commutateur correspondant (46) d'un trajet d'émission (P1, P2, PN) est réglé de sorte que la puissance d'émission (51) dans au moins une antenne intérieure (A2, AN) différente de la première antenne intérieure (A1) est alimentée, dans laquelle aucune occupation de siège correspondante n'est signalée.

3. Procédé selon l'une quelconque des revendications précédentes, dans lequel la puissance d'émission (51) est régulée au moyen d'un réglage d'un amplificateur d'émission (44) d'un trajet d'émission (P1, P2, PN) d'une antenne intérieure respective (A1, A2, AN).

4. Procédé selon l'une quelconque des revendications précédentes, dans lequel la puissance d'émission (51) est régulée par une insertion respective d'un atténuateur (45) dans un trajet d'émission (P1, P2, PN) menant à l'antenne intérieure respective (A1, A2, AN).

5. Procédé selon l'une quelconque des revendications précédentes, dans lequel le signal d'occupation (48) est émis directement à un dispositif d'émission (42, 47), qui est conçu pour envoyer un signal d'émission dans l'antenne intérieure respective (A1, A2, AN), ou un ordinateur de bord transmet le signal d'occupation (48) vers un dispositif d'émission respectif (42, 47).

6. Procédé selon l'une quelconque des revendications précédentes, dans lequel la puissance d'émission (51) à réguler en fonction du signal d'occupation respectif (48) est déterminée à une étape d'étalonnage par au moins une mesure d'une intensité de champ électromagnétique sur au moins un siège respectif (34).

7. Procédé selon l'une quelconque des revendications précédentes, dans lequel une antenne Bluetooth et/ou une antenne WiFi et/ou une antenne radio mobile est utilisée comme antenne intérieure (A1, A2, AN).

8. Dispositif de régulation (40) pour véhicule à moteur (30), qui est conçu pour réguler une puissance d'émission (51) sur au moins une antenne (A1, A2, AN) du véhicule à moteur (30),
**caractérisé en ce que**
le dispositif de régulation (40) est conçu pour réguler une puissance d'émission respective (51) sur au moins une antenne intérieure (A1, A2, AN) en fonction d'une occupation de siège selon un procédé selon l'une des revendications 1 à 7, une information sur l'occupation de siège étant fournie par un capteur (S1, S2, SN) du véhicule à moteur (30) et/ou du dispositif de régulation (40).

9. Véhicule à moteur (30) avec un dispositif de régulation (40) selon la revendication 8,
**caractérisé en ce que**
une puissance d'émission (51) sur au moins une antenne intérieure (A1, A2, AN) du véhicule à moteur (30) peut être régulée au moyen du dispositif de régulation (40) selon un procédé selon l'une des revendications 1 à 7.
